# EUROPÄISCHE PATENTSCHRIFT

(11) **EP 3 478 371 B1**
(45) Veröffentlichungstag und Bekanntmachung des Hinweises auf die Patenterteilung: **09.04.2025**
(21) Anmeldenummer: 17734275.5
(22) Anmeldetag: 21.06.2017
(51) Int. Cl.: A62C 4/00, G01L 19/06, A62C 3/16

(54) **DRUCKENTLASTUNGSVORRICHTUNG**
PRESSURE RELEASE DEVICE
DISPOSITIF DE DÉCOMPRESSION

(30) Priorität: 29.06.2016 DE 102016211763
(43) Veröffentlichungstag der Anmeldung: 08.05.2019
(73) Patentinhaber: Eaton Intelligent Power Limited, Dublin 4 (IE)
(72) Erfinder: OTT, Toni, Dublin 4 (IE); NAUMANN, Reiner, 68239 Mannheim (DE); HERBOLD, Dominik, 69256 Mauer (DE)
(74) Vertreter: Epping - Hermann - Fischer
(86) Internationale Anmeldenummer: PCT/EP2017/065283
(87) Internationale Veröffentlichungsnummer: WO 2018/001832

(56) Entgegenhaltungen:
- EP-A2- 2 842 609
- DE-A1- 102006 048 242
- DE-A1- 102010 016 782
- JP-A- H11 153 504
- US-A1- 2004 177 696
- US-B1- 6 715 360

## Beschreibung

Die Erfindung betrifft eine Druckentlastungsvorrichtung für ein explosionsgeschütztes, insbesondere druckfestes Gehäuse mit einem Wandstutzen, der zumindest teilweise in einer Gehäuseöffnung einer Gehäusewandung mit seinem Einsetzstutzenabschnitt einsetzbar ist, von einer Gehäuseinnenseite her insbesondere lösbar fixierbar ist, und in seiner eingesetzten und fixierten Position mit einem radial nach außen abstehenden Anlageflansch von außen an einem Öffnungsrand der Gehäuseöffnung anliegt, wobei der Wandstutzen weiterhin einen relativ zum Anlageflansch dem Einsetzstutzenabschnitt gegenüberliegenden Vorstehstutzenabschnitt sowie eine den Wandstutzen durchsetzenden Längskanal aufweist, in dem ein Flammensperrkörper austauschbar eingesetzt ist.

Eine solche Druckentlastungsvorrichtung ist beispielsweise aus der DE 10 2013 109 260 A1 bekannt. In dem entsprechenden Gehäuse befinden sich elektrische oder elektronische Bauteile und Komponenten. Ist außerhalb des Gehäuses eine zündfähige Atmosphäre vorhanden, können diese als Zündquellen dienen. Findet innerhalb des Gehäuses eine Explosion statt, soll verhindert werden, dass Flammen oder Zündfunken aus dem Gehäuse austreten und gegebenenfalls die entsprechende äußere Atmosphäre zünden. Dazu ist der entsprechende Flammensperrkörper in dem Längskanal der Druckentlastungsvorrichtung eingesetzt. Dieser ist nach DE 10 2013 109 260 A1 stoffschlüssig und/oder kraftschlüssig und/oder formschlüssig in dem Längskanal befestigt, sodass eine zündspaltfreie, aber gasdurchlässige Anordnung des Flammensperrkörpers möglich ist. Ferner ist aus der DE 10 2010 016 782 A1 eine Druckentlastungsvorrichtung für ein Gehäuse bekannt, die einen porösen Körper als Flammensperrkörper aufweist, der in einem Gehäusestutzen aufgenommen ist. Der Gehäusestutzen mit einer Längsöffnung ist von innen durch eine Öffnung im Gehäuse geführt und von außen am Gehäuse fixiert. Der poröse Körper ist in der Längsöffnung aufgenommen und an seinem Rand mit einem Porenverschluss versehen, um ein Durchschlagen einer Flamme an seinem Rand zu verhindern.

Der Erfindung liegt die Aufgabe zugrunde, die Druckentlastungsvorrichtung der eingangs genannten Art dahingehend zu verbessern, dass die Funktion des Flammensperrkörpers in einfacher Weise von außen visuell überprüfbar ist und gegebenenfalls der Flammensperrkörper einfach austauschbar ist. Außerdem soll der Flammensperrkörper einfach einsetzbar und gegebenenfalls variabel druckbeaufschlagbar sein.

Diese Aufgabe wird durch die Merkmale des Patentanspruchs 1 gelöst.

Erfindungsgemäß zeichnet sich die Druckentlastungsvorrichtung insbesondere dadurch aus, dass auf einen freien Endabschnitt des Vorstehstutzenabschnitts eine den Flammensperrkörper in seiner Einsetzstellung druckbeaufschlagende Druckmutter mit radial nach innen zumindest stellenweise vorstehendem Druckrand aufschraubbar ist. Der Druckrand ist dann mit einer Außensichtseite des Flammensperrkörpers in Anlage. Die Druckbeaufschlagung erfolgt durch entsprechendes Befestigen der Druckmutter, wobei die Druckausübung über den mit der Außensichtseite des Flammensperrkörpers in Anlage stehenden Druckrand erfolgt. Durch einfaches Lösen der Druckmutter kann der Flammensperrkörper ausgetauscht werden. Gleichzeitig erstreckt sich der entsprechende Druckrand nur so weit radial nach innen, dass der größte Teil der Außensichtseite des Flammensperrkörpers visuell von außen sichtbar ist.

Die erfindungsgemäße Druckentlastungsvorrichtung ist auch anstelle anderer bekannter Druckentlastungsvorrichtung einsetzbar. Es besteht in diesem Zusammenhang ebenfalls die Möglichkeit, dass der entsprechende Flammensperrkörper aus mehreren Einzelflammensperrkörpern zusammengesetzt ist, um für jeden der Flammensperrkörper beispielsweise separate Materialien verwenden zu können.

Um die Anordnung des Flammensperrkörpers innerhalb des Längskanals in einfacher Weise reproduzieren zu können, kann der Längskanal eine radial nach innen vorspringende Auflagestufe zur Festlegung der Einsetzstellung des Flammensperrkörpers aufweisen. D.h., der Flammensperrkörper wird einfach in den Längskanal eingesetzt und in Anlage mit der Auflagestufe gedrückt. Die weitere Fixierung und Druckbeaufschlagung erfolgt dann durch Aufschrauben der Druckmutter.

Um gegebenenfalls Flammensperrkörper unterschiedlicher Dicke anordnen zu können, kann zwischen Auflagestufe und Sperrkörper ein Abstandsring angeordnet sein. Außerdem kann die Anordnung des entsprechenden Abstandsrings bei gewissen Gerätegruppen unterschiedlich sein. Beispielsweise wird bei der Gerätegruppe II B ein dünnerer Flammensperrkörper als bei der Gerätegruppe II C verwendet. Der dünnere Flammensperrkörper ermöglicht eine höhere Druckentlastung, wodurch gegebenenfalls eine weitere Druckentlastungsvorrichtung nicht notwendig ist, um einen Innendruck in dem entsprechenden Gehäuse auf zulässige Level zu erniedrigen. Durch die einfache und sichere Anordnung des entsprechenden Flammensperrkörpers ist auch ein Einsatz der Druckentlastungsvorrichtung gemäß Erfindung bei niedrigeren Temperaturen möglich. Dabei ist zu beachten, dass der Explosionsdruck anwächst, wenn die Temperatur sinkt.

Ein einfaches Befestigen der Druckmutter kann dadurch erfolgen, wenn der Vorstehstützenabschnitt ein zum Innengewinde der Druckmutter passendes Außengewinde aufweist. Dies erstreckt sich zumindest teilweise entlang des Vorstehstutzenabschnitts und mit ausreichender Länge, um eine ausreichende Druckbeaufschlagung des Flammensperrkörpers über insbesondere den Druckrand zu ermöglichen. Dabei ist es möglich, dass der Druckrand beispielsweise auch innen im Bereich einer Längsbohrung der Mutter vorsteht und bei Aufschrauben der Druckmutter auf die Oberseite bzw. Außensichtseite des Flammensperrkörpers aufgedrückt wird. Eine verbesserte Sichtbarkeit des Flammensperrkörpers kann sich allerdings in günstiger Weise ergeben, wenn der Druckrand am äußeren freien Ende der Druckmutter ausgebildet ist.

Weiterhin lässt sich die Druckmutter durch beispielsweise entsprechendes Werkzeug vereinfacht aufschrauben, wenn der Druckrand insbesondere auf seiner Außenseite als Einschraubvielkant und bevorzugt als -sechskant ausgebildet ist.

Es besteht die Möglichkeit, dass der Druckrand mit einer flachen Unterseite ausgebildet ist, die entsprechend auf die Außensichtseite des Flammensperrkörpers aufdrückt. Um eine verbesserte Druckausübung zu erreichen, kann der Druckrand auf seiner dem Flammensperrkörper zuweisenden Unterseite einen Andrückvorsprung aufweisen. Dieser ist beispielsweise am freien Ende des radial nach innen vorstehenden Druckrands ausgebildet. Der Vorsprung kann flach oder auch in Richtung Flammensperrkörper konvex gewölbt ausgebildet sein. Durch diesen Andrückvorsprung erfolgt vor vollständigem Aufschrauben der Druckmutter ein entsprechendes Andrücken des Flammensperrkörpers an den Andrückvorsprung.

Bei entsprechend explosionsgeschützten Gehäusen soll ein zufälliges Lösen der Druckmutter verhindert werden, da ansonsten der Flammensperrkörper gegebenenfalls nicht mehr seine Funktion erfüllt. Dazu besteht die Möglichkeit, die Druckmutter beispielsweise als drehgesicherte Mutter auszubilden. Eine weitere Möglichkeit besteht darin, dass zur Sicherung eine Passschraube seitlich in die Druckmutter einschraubbar ist.

Der Flammenkörper kann aus unterschiedlichen Materialien und in unterschiedlicher Weise hergestellt werden. Bei einem bevorzugten Ausführungsbeispiel kann der Flammensperrkörper ein Sinterkörper sein. Dieser besteht in günstiger Weise aus nicht brennbaren Metallfasern, Keramikschäumen oder auch Mischungen entsprechender nicht brennbarer Materialien. Bei einem solchen Sinterkörper sind Porosität, Porengröße, Dichte und weitere Eigenschaften des hergestellten Flammensperrkörpers je nach Erfordernis auswählbar. Es sind ebenfalls andere körnige oder pulvrige Stoffe verwendbar zur Herstellung eines solchen Sinterkörpers.

Der Flammensperrkörper kann eine flache Ober- und/oder Unterseite mit einem flachen Randbereich zwischen diesen aufweisen. Ebenfalls denkbar ist, dass zumindest in einem Randbereich oder auch auf der gesamten Ober- und Unterseite eine gewisse Wölbung vorhanden ist. Der Randbereich ist in der Regel flach, da dort die Zünddurchschlagsicherheit hauptsächlich realisiert wird. Der Abstandsring sollte auch im Falle von Feuer oder Flammen ausreichend geschützt sein, sodass dieser vorteilhafterweise aus einem flammengeschützten oder feuerfesten Material hergestellt ist.

Um insbesondere den Einsetzstutzenabschnitt in einfacher Weise in die entsprechende Gehäuseöffnung einsetzen und dann den Anlageflansch mit dem entsprechenden Rand der Gehäuseöffnung in Anlage bringen zu können, kann der Einsetzstutzenabschnitt an seinem dem Anlageflansch angrenzenden Endabschnitt einen Gewindefreistrich aufweisen. Im übrigen Bereich ist ein entsprechendes Gewinde ausgebildet, das von der Innenseite des Gehäuses her zum Anbringen einer Kontermutter oder dergleichen verwendet wird. Es besteht außerdem die Möglichkeit, dass ein entsprechendes Dichtungselement zwischen Rand der Gehäuseöffnung und Anlageflansch vorgesehen ist, um auch in diesem Bereich den entsprechenden Anforderungen des Explosionsschutzes zu genügen.

Wie bereits oben erwähnt, sollte der Flammensperrkörper zündspaltfrei im Längskanal eingesetzt sein. Dies kann insbesondere dadurch erfolgen, dass bei entsprechender Druckbeaufschlagung durch die Druckmutter der Flammensperrkörper sich etwas verformt, um das Auftreten entsprechender Zündspalte zwischen einem Umfangsrand des Flammensperrkörpers und dem Längskanal zu vermeiden.

Um Gegebenenfalls mehrere Flammensperrkörper in dem entsprechenden Längskanal anordnen zu können, kann zwischen Druckmutter und Anschlagflansch ein Zwischenstutzen anordbar sein, der mit seinem Stutzenendabschnitt auf den Vorstehstutzenabschnitt aufschraubbar ist und an seinem anderen Mutterendabschnitt die Druckmutter aufschraubbar ist. In diesem Zwischenstutzen kann entsprechend eine weitere Auflagestufe oder Ringstufe angeordnet sein, auf der ein weiterer Flammensperrkörper anordbar ist.

Um mit dem Zwischenstutzen einen bereits vorhandenen Flammensperrkörper im Vorstehstutzenabschnitt zu beaufschlagen, kann der Zwischenstutzen eine radial nach innen vorstehenden, den Flammenkörper in Richtung Auflagestufe druckbeaufschlagenden Druckstufe aufweisen. Wird entsprechend der Zwischenstutzen aufgeschraubt, so drückt die Druckstufe den Flammensperrkörper in Richtung Auflagestufe, wie es bereits oben in Zusammenhang mit der Druckmutter beschrieben wurde.

Die entsprechende Druckstufe kann an unterschiedlichen Stellen des Zwischenstutzens ausgebildet sein, wobei bei einem einfachen Ausführungsbeispiel die Druckstufe an einem unteren Ende des Mutterendabschnitts angeordnet sein kann.

Um im Zwischenstutzen analog zum Wandstutzen entsprechend einen Flammensperrkörper oder dergleichen anordnen zu können, kann der Mutterendabschnitt eine radial nach innen vorstehende Ringstufe aufweisen, deren Außendurchmesser insbesondere im Wesentlichen gleich einem Außendurchmesser der Auflagestufe ist. Durch diese im Wesentlichen gleichen Außendurchmesser sind auch die gleichen Flammensperrkörper oder dergleichen anordbar. Es kann sich allerdings auch als vorteilhaft erweisen, wenn anstelle eines weiteren Flammensperrkörpers ein Spritzwasserschutzkörper auf der Ringstufe anordbar und mittels der Druckmutter mit Druckrand in Richtung Ringstufe druckbeaufschlagbar ist. Ein solcher Spritzwasserschutzkörper dient zum Schutz vor Spritzwasser, sodass dieses nicht in die Druckentlastungsvorrichtung eindringen kann.

Der entsprechende Spritzwasserschutzkörper ist dem Flammensperrkörper in Richtung von der entsprechenden Gehäuseöffnung nachgeordnet.

Auch der Spritzwasserschutzkörper kann ein Sinterkörper sein. Dabei können Spritzwasserschutzkörper und Flammensperrkörper aus dem gleichen Material hergestellt sein. Dies gilt für einen Sinterkörper aber auch für andere Körper zur Realisierung von Spritzwasserschutzkörper oder Flammensperrkörper.

Der Spritzwasserschutzkörper kann dabei eine höhere Dichte als der Flammensperrkörper aufweisen. Durch die höhere Dichte weist dieser Spritzwasserschutzkörper dann eine geringe Porosität auf, die ein entsprechendes Eindringen von Spritzwasser verhindert.

Um gegebenenfalls Feuchtigkeit, die sich im Längskanal gebildet oder in diesen eingedrungen ist, nach außen abführen zu können, kann der Spritzwasserschutzkörper wenigstens eine Drainageöffnung aufweisen. Diese kann bevorzugt als in radialer Richtung nach außen offene Randnut ausgebildet sein. Es sind allerdings ebenfalls auch Bohrungen im Spritzwasserschutzkörper denkbar, die die beiden Seiten des Spritzwasserschutzkörpers in Längsrichtung des Längskanals verbinden.

Vorzugsweise sind Spritzwasserschutzkörper und Flammensperrkörper im Längskanal beabstandet zueinander angeordnet. Der entsprechende Abstand wir dadurch die Anordnung der Auflagestufe relativ zur Ringstufe bestimmt. In diesem Zwischenraum kann sich gegebenenfalls Feuchtigkeit sammeln, die dann über die Drainageöffnungen nach außen abgebbar ist.

Um den Flammensperrkörper vor Feuchtigkeit und gegebenenfalls vor Staub oder dergleichen zu schützen, kann zwischen Spritzwasserschutzkörper und Flammensperrkörper eine Feuchtigkeitsschutzmembran insbesondere austauschbar angeordnet sein. Dadurch wird verhindert, dass Feuchtigkeit den Flammensperrkörper erreicht, wobei dies ebenfalls für Staub oder dergleichen dient. Staub oder andere Schmutzpartikel könnten gegebenenfalls den Flammensperrkörper und dessen Porosität zum Durchlassen von Gas verstopfen. Die Membran ist in der Regel so ausgebildet, dass sie bei einem entsprechenden Überdruck von Seiten des Gehäuses vor dem Flammenschutzkörper zerstört wird, sodass entsprechende Gase ungehindert über die Druckentlastungsvorrichtung nach außen austreten können. Die Membran ist hinterher in einfacher Weise ersetzbar. Dies gilt ebenfalls für den Spritzwasserschutzkörper, der Staub und andere Schmutzpartikel aufnehmen und dann vor einem entsprechenden Verstopfen ausgetauscht werden kann.

Erfindungsgemäß sind alle Teile wie Flammensperrkörper, Spritzwasserschutzkörper und Feuchtigkeitsschutzmembran separat austauschbar. Gleichzeitig sind alle in einfacher Weise von außen visuell überprüfbar.

Ebenso wie bei der Druckmutter kann auch der Zwischenstutzen mittels einer Passschraube oder dergleichen in seiner Aufschraubstellung gesichert sein.

Dies gilt ebenso für ein Hilfsmittel zum Verschrauben des Zwischenstutzens, wobei dieser beispielsweise einen radial nach außen vorstehenden Einschraubvielkant in Form eines Einschraubsechskants aufweisen kann.

Insbesondere in Zusammenhang mit der Druckausübung durch Druckmutter bzw. Zwischenstutzen auf Spritzwasserschutzkörper bzw. Flammensperrkörper kann es sich weiterhin als günstig erweisen, wenn gegebenenfalls Spritzwasserschutzkörper und/oder Flammensperrkörper druckelastisch sind. Um insbesondere im Bereich des Außenrandes beider Körper die Zünddurchschlagssicherheit ohne Beeinflussung der Gasdurchlässigkeit zu verbessern, können Spritzwasserschutzkörper und/oder Flammensperrkörper einen außenrandseitigen Porenverschluss aufweisen.

Im Folgenden wird die Erfindung anhand der in den Zeichnungen beigefügten Figuren näher erläutert und beschrieben.

Es zeigen:
- Figur 1: eine auseinandergezogene Darstellung eines Ausführungsbeispiels einer Druckentlastungsvorrichtung;
- Figur 2: eine vergrößerte Darstellung der zusammengesetzten Druckentlastungsvorrichtungen nach Figur 1;
- Figur 3: eine Darstellung analog zu Figur 2 für ein zweites Ausführungsbeispiel einer Druckentlastungsvorrichtung mit Zwischenstutzen;
- Figur 4: eine geschnittene Darstellung der Druckentlastungsvorrichtung nach Figur 3 mit Drainageöffnungen, und
- Figur 5: eine vergrößerte Darstellung insbesondere eines Spritzwasserschutzkörpers nach Figur 4.

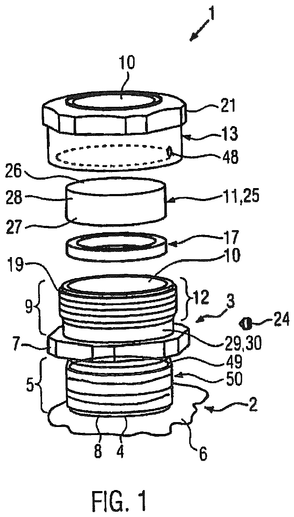

Figur 1 zeigt eine auseinander gezogene Darstellung eines ersten Ausführungsbeispiels einer erfindungsgemäßen Druckentlastungsvorrichtung 1. Diese wird in eine Gehäuseöffnung 4 eines nicht weiter dargestellten Gehäuses 2 mit einem Wandstutzen 3 eingesetzt. Der Wandstutzen 3 umfasst einen Einsetzstutzenabschnitt 5 und einen Vorstehstutzenabschnitt 9. Zwischen diesen ist ein Anlageflansch 7 angeordnet. Bei vollständig in der Gehäuseöffnung 4 eingesetztem Einsetzstutzenabschnitt 5 liegt der Anlageflansch 7 entlang eines Öffnungsrandes 8 der Gehäuseöffnung 4 von außen an der entsprechenden Gehäusewandung 6 an. Der Einsetzstützenabschnitt 5 weist ein Außengewinde 50 auf, auf das vom Inneren des Gehäuses her eine entsprechende Kontermutter aufschraubbar ist, oder das in ein Öffnungsgewinde einschraubbar ist.

Die entsprechende Druckentlastungsvorrichtung 1 dient zur Druckentlastung, falls sich ein bestimmter Explosionsdruck innerhalb des Gehäuses aufbaut. Das entsprechende Gehäuse 2 soll explosionsfest und insbesondere druckfest aufgebaut sein. Durch die entsprechende Druckentlastungsvorrichtung wird bei einer Explosion in dem Gehäuse der entsprechende Explosionsdruck entlastet, indem entsprechende Explosionsgase über einen Flammensperrkörper der Druckentlastungsvorrichtung nach außen austreten. Dieser Flammensperrkörper ist gasdurchlässig und zünddurchschlagsicher. Gemäß Erfindung ist der Flammensperrkörper 11 innerhalb eines entsprechenden Längskanals 10 der Druckentlastungsvorrichtung 1 angeordnet, wobei sich dieser Längskanal 10 sowohl durch den Wandstutzen 3 als auch durch eine entsprechende Druckmutter 13 erstreckt.

Der Vorstehstutzenabschnitt 9 weist einen freien Endabschnitt 12 mit Außengewinde 19 und zwischen diesem Außengewinde 19 und dem Anlageflansch 7 einen Endabschnitt 29 mit Gewindefreistich 30. Auch das Außengewinde 19 ist die Druckmutter 13 mit einem entsprechenden Innengewinde 18 aufschraubbar.

Der Anlageflansch 7 weist entlang seines Außenumfangs einen Sechskant auf, um ihn mittels eines Werkzeugs in seiner Position beim Aufschrauben der entsprechenden Kontermutter vom Inneren des Gehäuses her zu fixieren.

Der Einsetzstützenabschnitt 5 weist oberhalb eines entsprechenden Außengewindes 50 einen Unterschnitt 49 auf, der sich direkt an den Anlageflansch 7 anschließt.

Der Flammensperrkörper 11 ist vorzugsweise als Sinterkörper 25 ausgebildet. Dieser kann aus entsprechenden nicht brennbaren Materialien wie Keramikschaum, Metalfasern oder dergleichen hergestellt sein. Der Flammensperrkörper weist eine entsprechende Porosität auf, die die Gasdurchlässigkeit ermöglicht und gleichzeitig die Zünddurchschlagsicherheit gewährt.

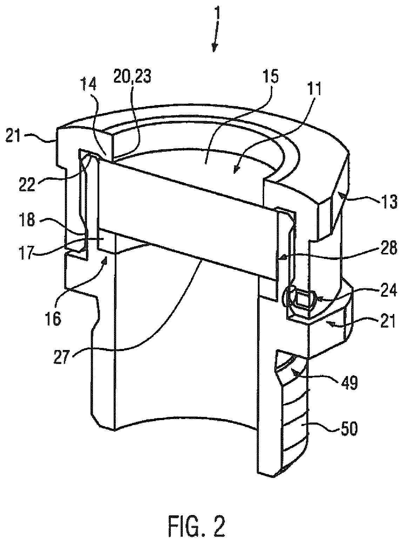

Der Flammensperrkörper 11 weist eine Oberseite 26 und eine Unterseite 27 auf, die durch einen Randbereich 28 verbunden sind. Bei dem dargestellten Ausführungsbeispiel sind Oberseite 26 und Unterseite 27 flach ausgebildet, wobei allerdings auch eine Wölbung im gesamten Bereich von Oberseite bzw. Unterseite oder zumindest entlang eines Randes von Oberseite und Unterseite vorhanden sein kann. Eine solche Wölbung kann sowohl konkav als auch konvex sein. Ist die Druckmutter 13 auf den Vorstehstutzenabschnitt 9 aufgeschraubt, kann sie in ihrer aufgeschraubten Position durch beispielsweise eine Passschraube 24 gesichert sein. Diese wird seitlich in die Druckmutter in eine entsprechende Gewindebohrung 28 eingeschraubt, siehe auch Figur 2. Statt nur eines Flammensperrkörpers 11 können auch zwei oder mehr Flammensperrkörper angeordnet sein sowie beispielsweise auch zusätzlich ein Abstandsring 17. Dieser ist ebenfalls aus einem feuerfesten Material oder zumindest aus einem flammengeschützten Material, was ein entsprechender Kunststoff, ein Sinterwerkstoff oder dergleichen sein kann.

In Figur 2 sind die entsprechenden Teile nach Figur 1 in ihrer zusammengesetzten Stellung dargestellt. In dem Längsschnitt ist erkennbar, dass der Vorstehstutzenabschnitt 9 auf seiner Innenseite eine radial nach innen vorstehende Auflagestufe 16 aufweist. Auf dieser ist direkt der Flammensperrkörper 11 oder gegebenenfalls zwischen diesem und der Auflagestufe der entsprechende Abstandsring 17 anordbar. Der Flammensperrkörper 11 ist zwischen Auflagestufe 16 bzw. Abstandsring 17 und Druckmutter 13 eingeklemmt. Die Druckmutter 13 weist einen radial nach innen vorstehenden Druckrand 14 auf. Dieser weist an seinem inneren freien Ende 20 einen von seiner Unterseite nach unten vorstehenden Andrückvorsprung 23 auf. Dieser liegt von oben an einer entsprechenden Außensichtfläche 15 des Flammensperrkörpers 11 auf und druckbeaufschlagt diesen in Richtung Auflagestufe 16 bzw. Abstandsring 17. In Figur 2 ist die Druckmutter 13 mittels ihres Innengewindes 18 mit dem entsprechenden Außengewinde 19 des Vorstehstutzenabschnitts 9 verschraubt.

Auf diese Weise ist der Flammensperrkörper 11 so beaufschlagt, dass er im Längskanal 10 zündspaltfrei und gasdurchlässig angeordnet ist.

Die Druckmutter 13 weist am äußeren Rand des entsprechenden Druckrandes 14 einen entsprechenden Einschraubvielkant 21 insbesondere in Form eines Sechskants auf.

Der Randbereich 28 ist in engem Kontakt mit einer Innenseite des Längskanals 10, sodass keine Zündspalte oder andere Freiräume zwischen diesen gebildet sind.

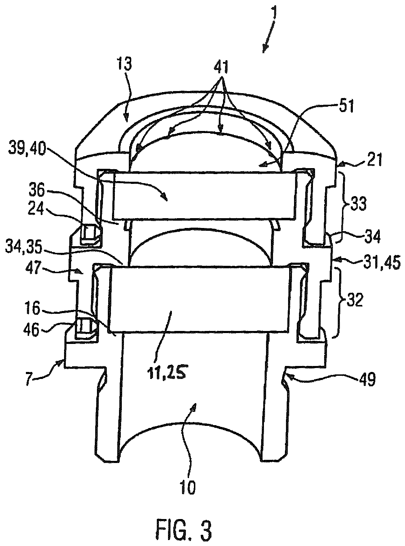

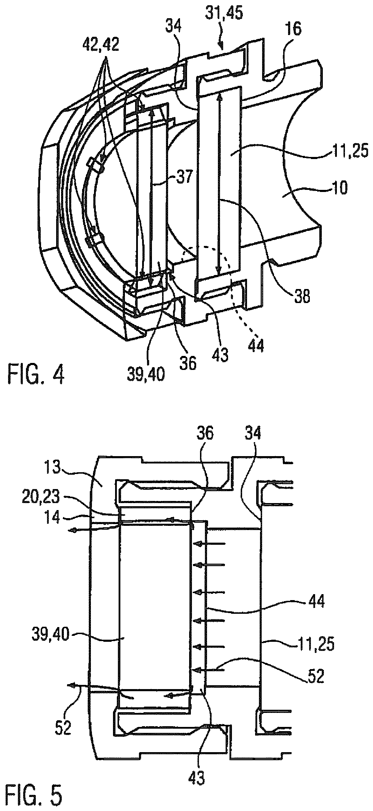

In Figur 3 ist ein zweites Ausführungsbeispiel einer Druckentlastungsvorrichtung 1 analog zur Figur 2 dargestellt. Diese Druckentlastungsvorrichtung 1 unterscheidet sich von der bereits beschriebenen Druckentlastungsvorrichtung insbesondere durch einen Zwischenstutzen 1. Dieser dient als Zwischenglied zwischen Wandstutzen 3 und Druckmutter 13. Analog zu Figur 2 ist der entsprechende Flammensperrkörper 11 in diesem Fall ohne zusätzlichen Abstandsring 17 auf der Auflagestufe 16 aufgelegt. Die entsprechende Druckbeaufschlagung des Flammensperrkörpers 11 in Richtung der Auflagestufe 16 erfolgt durch eine radial nach innen vorstehende Druckstufe 34. Diese ist am unteren Ende 35 eines Mutterendabschnitts 33 des Zwischenstutzens 31 ausgebildet. Der Zwischenstutzen 31 weist weiterhin einen Stutzenendabschnitt 32 auf, der analog zur Druckmutter 13 nach Figur 2 auf das entsprechende Außengewinde 19 des Vorstehstutzenabschnitts 9 aufgeschraubt ist. Zwischen Stutzenendabschnitt 32 und Mutterendabschnitt 33 ist ein entsprechender Außensechskant ausgebildet. Im Bereich des Mutterendabschnitts 33 ist weiterhin eine radial nach innen vorstehende Ringstufe 36 ausgebildet. Diese weist in etwa den gleichen Außendurchmesser 37 auf, siehe Figur 4, wie die Auflagestufe 16 mit ihrem Außendurchmesser 38.

Die Ringstufe 36 dient zur Anordnung eines Spritzwasserschutzkörpers 39. Dieser kann aus dem gleichen Material wie der Flammensperrkörper hergestellt sein. In der Regel ist der Spritzwasserschutzkörper 39 ebenfalls ein Sinterkörper 40. Eine Dichte des Spritzwasserschutzkörpers 39 ist geringer als eine entsprechende Dichte des Flammensperrkörpers 11. Dadurch sind beispielsweise bei gleichem Material für beide Körper die entsprechenden Porositäten im Fall eines Hinterkörpers anders. D.h., der Spritzwasserschutzkörper weist eine geringere Porosität auf.

Der Spritzwasserschutzkörper 39 wird analog zu Figur 2 durch die entsprechende Druckmutter 13 gehalten und in Richtung Ringstufe 36 druckbeaufschlagt.

Weiterhin kann der Zwischenstutzen 31 in seiner Aufschraubstellung 45, siehe Figur 3, analog zur Druckmutter 13 beispielsweise durch eine Passschraube 46 gesichert sein.

Auf einer Oberseite 51 des Spritzwasserschutzkörpers 39 sind im Bereich des Druckrandes 14 der Druckmutter 13 Drainageöffnungen 41 sichtbar. Diese erstrecken sich, siehe auch Figur 4, insbesondere in Form von radial nach außen offenen Randnuten 42 zwischen dem von Spritzwasserschutzkörper 39 und Flammensperrkörper 11 begrenzten Innenraum nach außen. Die Drainageöffnungen 41 dienen als Entfeuchtungsöffnungen für gegebenenfalls in dem entsprechenden Innenraum vorhandene Feuchtigkeit. Weiterhin dient der Spritzwasserschutzkörper 39 als Schutz vor Spritzwasser und vor Staub oder anderen Verschmutzungspartikeln. Durch den Spritzwasserschutzkörper 39 wird ein Eindringen in diesen in den Längskanal 10 verhindert.

In Figur 4 ist in einem weiteren Längsschnitt insbesondere ein oberer Teil der Druckentlastungsvorrichtung 1 nach Figur 3 sichtbar. Zusätzlich ist in Figur 4 als Alternative für ein weiteres Ausführungsbeispiel eine Feuchtigkeitsschutzmembran 44 in den Zwischenraum zwischen Spritzwasserschutzkörper 39 und Flammensperrkörper 11 angeordnet. Die Feuchtigkeitsschutzmembran 44 kann beispielsweise auch auf einer Unterseite des Spritzwasserschutzkörpers 39 und/oder einer Oberseite des Flammensperrkörpers 11 direkt angeordnet sein. Die Feuchtigkeitsschutzmembran 44 schützt ein Eindringen von Feuchtigkeit in Richtung Flammensperrkörper. Die Zerreißfestigkeit der Feuchtigkeitsschutzmembran 44 ist so ausgebildet, dass diese bereits bei einem relativ geringen Druck zerreißt, bei dem ein entsprechender Druckabbau durch die Druckentlastungsvorrichtung 1 erfolgt. Die Feuchtigkeitsschutzmembran 44 kann ebenso wie Spritzwasserschutzkörper 39 bzw. Flammensperrkörper 11 ausgetauscht werden.

In Figur 4 sind insbesondere die Drainageöffnungen in Form von Randnuten 42 erkennbar. Diese sind auf Seiten des Flammensperrkörpers 11 mit einem Anstich 43 im Bereich der Ringstufe 36 in Verbindung, sodass ein Entweichen von Feuchtigkeit über Anstich 43 und Drainageöffnungen 41 nach außen relativ zur Druckentlastungsvorrichtung 1 erfolgen kann. Dies ist insbesondere auch in Figur 5 durch die entsprechenden Entweichpfeile 52 dargestellt.

Gewisse weitere Teile sind zur Vereinfachung in den Figuren nicht dargestellt, wie beispielsweise ein zusätzliches Dichtungselement, das zwischen Öffnungsrand 8 und Unterseite des Anlageflansches 7 anordbar ist.

Der Spritzwasserschutzkörper 39 schützt insbesondere den Flammensperrkörper 11 vor äußeren Einflüssen, wie Feuchtigkeit und Staub oder anderer Verschmutzung. Ist der Spritzwasserschutzkörper 39 beispielsweise durch Aufnahme durch entsprechenden Staub in seiner Porosität negativ beeinflusst, kann er gegen einen neuen Spritzwasserschutzkörper 39 durch einfaches Abschrauben der Druckmutter 13 ausgetauscht werden. gleichzeitig gewährt die Erfindung, dass sowohl Flammensperrkörper als auch Spritzwasserschutzkörper in einfacher Weise von außen visuell überprüfbar sind und gegebenenfalls ausgetauscht werden. Das visuelle Überprüfen und Austauschen kann unabhängig voneinander erfolgen.

Die zusammengesetzte Druckentlastungsvorrichtung gemäß Erfindung kann beispielsweise auch direkt in eine entsprechende Einschrauböffnung eines Gehäuses eingeschraubt werden, siehe hierzu das entsprechende Außengewinde im Bereich des Einsetzstutzenabschnitts 5. Die Verbindung sollte dabei explosionsgeschützt und insbesondere druckfest ausgebildet sein.

Um im Randbereich insbesondere von dem Flammensperrkörper und gegebenenfalls auch im Bereich des Spritzwasserschutzkörpers die Zündspaltfreiheit zu verbessern, kann der Randbereich einen randseitigen Porenverschluss aufweisen. Weiterhin können Spritzwasserschutzkörper und/oder Flammensperrkörper druckelastisch sein.

Erfindungsgemäß wird ein Druck innerhalb des Gehäuses, der sich beispielsweise durch eine Explosion ergibt, durch die Druckentlastungsvorrichtung abgebaut. Eine gegebenenfalls vorhandene explosive Atmosphäre außerhalb des Gehäuses wird dann nicht entzündet, da die Druckentlastungsvorrichtung zwar gasdurchlässig, aber zünddurchschlagssicher ausgebildet ist. Die erfindungsgemäße Druckentlastungsvorrichtung ist auch nachrüstbar und für Gehäuse einsetzbar, die bisher andere Druckentlastungsvorrichtungen verwenden. Die erfindungsgemäße Druckentlastungsvorrichtung erlaubt weiterhin den Einsatz entsprechender Gehäuse oder auch anderer Behältnisse bei tieferen Temperaturen. Hierbei ist zu beachten, dass der Explosionsdruck bei tieferen Temperaturen ansteigt und durch die erfindungsgemäße Druckentlastungsvorrichtung auch in einem solchen Fall sicher abbaubar ist.

Insbesondere wenn die Druckentlastungsvorrichtung außerhalb von Gebäuden oder in feuchter Umgebung und gegebenenfalls in staubiger Umgebung verwendet wird, kann diese zusätzlich den Zwischenstutzen und den Spritzwasserschutzkörper aufweisen. Letzterer schützt den Flammensperrkörper vor Wasser und Staub. Der Spritzwasserschutzkörper weist dazu Drainageöffnungen auf, die eingedrungene Feuchtigkeit oder eingesickertes Wasser nach außen abführen. Im Vergleich zum Spritzwasserschutzkörper weist der Flammensperrkörper in der Regel eine geringere Dicht auf, sodass er leichter auch hohe Drücke durch die Gasdurchlässigkeit abbauen kann und gleichzeitig die gegebenenfalls heißen Gase besser abkühlen kann. Beide Körper sind einfach visuell prüfbar und unabhängig voneinander austauschbar.

Durch zusätzliche Anordnung einer entsprechenden Feuchtigkeitsschutzmembran kann ein Eindringen von Feuchtigkeit in Richtung Flammensperrkörper verbessert werden und gleichzeitig die Druckentlastungsvorrichtung in Hinblick auf eine gegebenenfalls höhere Feuchtigkeitsbeabstandung von außen geschützt werden.

## Patentansprüche

1. Druckentlastungsvorrichtung (1) für ein explosionsgeschütztes, insbesondere druckfestes Gehäuse (2) mit einem Wandstutzen (3), der zumindest teilweise in eine Gehäuseöffnung (4) einer Gehäusewandung (6) mit seinem Einsetzstutzenabschnitt (5) einsetzbar ist, welcher von einer Gehäuseinnenseite her insbesondere lösbar fixierbar und in seiner eingesetzten und fixierten Position mit einem radial nach außen abstehenden Anlageflansch (7) von außen an einem Öffnungsrand (8) der Gehäuseöffnung (4) anliegt, wobei der Wandstutzen (3) weiterhin einen relativ zum Anlageflansch (7) dem Einsetzstutzenabschnitt gegenüberliegenden Vorstehstutzenabschnitt (9) sowie eine den Wandstutzen (3) durchsetzenden Längskanal (10) aufweist, in den ein Flammensperrkörper (11) austauschbar eingesetzt ist, wobei auf einen freien Endabschnitt (12) des Vorstehstutzenabschnitts (9) eine den Flammensperrkörper (11) in seiner Einsetzstellung beaufschlagenden Druckmutter (13) mit radial nach innen zumindest stellenweise vorstehendem Druckrand (14) aufschraubbar ist, und wobei der Druckrand (14) mit einer Außensichtseite des Flammensperrkörpers (11) in Anlage ist.

2. Druckentlastungsvorrichtung nach Anspruch 1, wobei der Längskanal (10) eine radial nach innen vorspringende Auflagestufe (16) zur Festlegung der Einsetzstellung des Flammensperrkörpers (11) aufweist, wobei vorzugsweise zwischen Auflagestufe (16) und Flammensperrkörper (11) insbesondere ein Abstandsring (17) bevorzugt aus einem flammengeschützten oder feuerfesten Material anordbar ist.

3. Druckentlastungsvorrichtung nach Anspruch 1 oder 2, wobei der Vorstehstutzenabschnitt (9) ein zu einem Innengewinde (18) der Druckmutter (13) passendes Außengewinde (19) aufweist.

4. Druckentlastungsvorrichtung nach einem der vorangehenden Ansprüche, wobei der Druckrand (14) am äußeren freien Ende (20) der Druckmutter (13) ausgebildet ist und insbesondere auf seiner Außenseite als Einschraubvielkant (21) ausgebildet ist und/oder der Druckrand (14) auf seiner dem Flammensperrkörper (11) zuweisenden Unterseite (22) einen Andrückvorsprung (23) aufweist.

5. Druckentlastungsvorrichtung nach einem der vorangehenden Ansprüche, wobei die Druckmutter (13) eine gegen Lösen gesicherte Mutter ist, wobei zur Sicherung insbesonders eine Passschraube (24) seitlich in die Druckmutter (13) einschraubbar ist.

6. Druckentlastungsvorrichtung nach einem der vorangehenden Ansprüche, wobei der Flammensperrkörper (11) einen Sinterkörper (25) ist und/oder der Flammensperrkörper (11) flache Ober- und/oder Unterseiten (26, 27) mit einem flachen Randbereich (28) zwischen diesen aufweist und/oder wobei der Flammensperrkörper (11) zündspaltfrei im Längskanal (10) eingesetzt ist.

7. Druckentlastungsvorrichtung nach einem der vorangehenden Ansprüche, wobei der Vorstehstutzenabschnitt (9) an seinem dem Anlageflansch (7) angrenzenden Endabschnitt (29) einen Gewindefreistich (30) aufweist.

8. Druckentlastungsvorrichtung nach einem der vorangehenden Ansprüche, wobei im Wesentlichen zwischen einer weiteren Druckmutter (13) und Anlageflansch (7) ein Zwischenstutzen (31) anordbar ist, der mit seinem Stutzenendabschnitt (32) auf den Vorstehstutzenabschnitt (9) aufschraubbar und an seinem anderen Mutterendabschnitt (33) die Druckmutter (13) aufschraubbar ist, wobei der Zwischenstutzen (31) insbesondere eine radial nach innen vorstehende, den Flammensperrkörper (11) in Richtung Auflagestufe (16) druckbeaufschlagende Druckstufe (34) aufweist, und somit in diesem Bereich als Druckmutter wirkt, wobei die Druckstufe (34) insbesondere an einem unteren Ende (35) des Mutterendabschnitts (33) angeordnet ist.

9. Druckentlastungsvorrichtung nach einem der vorangehenden Ansprüche, wobei der Mutterendabschnitt (33) eine radial nach innen vorstehende Ringstufe (36) aufweist, deren Außendurchmesser (37) insbesondere im Wesentlichen gleich einem Außendurchmesser (38) der Auflagestufe (16) ist, und bevorzugt ein Spritzwasserkörper (39) auf der Ringstufe (36) anordbar und mittels der Druckmutter (13) mit ihrem Druckrand (14) in Richtung Ringstufe (36) druckbeaufschlagbar ist, wobei der Spritzwasserschutzkörper (39) insbesondere ein Sinterkörper (40) ist.

10. Druckentlastungsvorrichtung nach einem der vorangehenden Ansprüche, wobei der Spritzwasserschutzkörper (39) und der Flammensperrkörper (11) aus dem gleichen Material hergestellt sind und/oder der Spritzwasserschutzkörper (39) eine höhere Dichte als der Flammensperrkörper (11) aufweist.

11. Druckentlastungsvorrichtung nach einem der vorangehenden Ansprüche, wobei der Spritzwasserschutzkörper (39) wenigstens eine Drainageöffnung (41) aufweist, wobei die Drainageöffnung (41) vorzugsweise als radial nach außen offene Randnut (42) ausgebildet ist.

12. Druckentlastungsvorrichtung nach einem der vorangehenden Ansprüche, wobei die Ringstufe (36) einen Längskanal (10) und Drainageöffnung (41) verbindenden Anstich (43) aufweist, wobei vorzugsweise der Spritzwasserschutzkörper (39) und der Flammensperrkörper (11) im Längskanal (10) beabstandet zueinander angeordnet sind.

13. Druckentlastungsvorrichtung nach einem der vorangehenden Ansprüche, wobei zwischen Spritzwasserschutzkörper (39) und Flammensperrkörper (11) eine Feuchtigkeitsschutzmembran (44) insbesondere austauschbar angeordnet ist.

14. Druckentlastungsvorrichtung nach einem der vorangehenden Ansprüche, wobei der Zwischenstutzen (31) mittels einer Passschraube (46) oder dergleichen in seiner Aufschraubstellung (45) gesichert ist, wobei der Zwischenstutzen (31) insbesondere einen radial nach außen vorstehenden Einschraubvielkant (47) aufweist.

15. Druckentlastungsvorrichtung nach einem der vorangehenden Ansprüche, wobei Spritzwasserschutzkörper (39) und/oder Flammensperrkörper (11) druckelastisch sind und/oder einen außenrandseitigen Porenverschluss aufweisen.

## Claims

1. A pressure release device (1) for an explosion-proof, in particular pressure-resistant housing (2) having a wall nozzle (3) which can be inserted at least partially into a housing opening (4) of a housing wall (6) with its insertion nozzle portion (5), which can be fixed from the inside of the housing, in particular in a detachable manner, and, in its inserted and fixed position, rests against an opening edge (8) of the housing opening (4) from the outside with a radially outwardly projecting contact flange (7), wherein the wall nozzle (3) further comprises a projecting nozzle portion (9), which is opposite the insertion nozzle portion relative to the contact flange (7), and a longitudinal channel (10) which passes through the wall nozzle (3) and into which a flame arrester body (11) is interchangeably inserted, wherein a pressure nut (13) acting on the flame arrester body (11) in its inserted position can be screwed onto a free end portion (12) of the projecting nozzle portion (9) with a pressure edge (14) projecting radially inwardly at least in parts, and wherein the pressure edge (14) is in contact with an outer visible side of the flame arrester body (11).

2. The pressure release device according to claim 1, wherein the longitudinal channel (10) has a radially inwardly projecting support step (16) for fixing the insertion position of the flame arrester body (11), wherein, preferably between the support step (16) and the flame arrester body (11), in particular a spacer ring (17) preferably made of a flame-retardant or fireproof material can be arranged.

3. The pressure release device according to claim 1 or 2, wherein the projecting nozzle portion (9) has an external thread (19) matching an internal thread (18) of the pressure nut (13).

4. The pressure release device according to one of the preceding claims, wherein the pressure edge (14) is formed on the outer free end (20) of the pressure nut (13) and in particular is formed on its outer side as a screw-in polygon (21) and/or the pressure edge (14) has a pressing projection (23) on its underside (22) facing the flame arrester body (11).

5. The pressure release device according to one of the preceding claims, wherein the pressure nut (13) is a nut secured against loosening, wherein in particular a fitting screw (24) can be screwed laterally into the pressure nut (13) for securing.

6. The pressure release device according to one of the preceding claims, wherein the flame arrester body (11) is a sintered body (25) and/or the flame arrester body (11) has flat upper sides and/or undersides (26, 27) with a flat edge region (28) between them, and/or wherein the flame arrester body (11) is inserted in the longitudinal channel (10) without an ignition gap.

7. The pressure release device according to one of the preceding claims, wherein the projecting nozzle portion (9) has a thread undercut (30) at its end portion (29) adjacent to the contact flange (7).

8. The pressure release device according to one of the preceding claims, wherein an intermediate nozzle (31) can be arranged substantially between a further pressure nut (13) and contact flange (7), which can be screwed with its nozzle end portion (32) onto the projecting nozzle portion (9) and the pressure nut (13) can be screwed onto its other nut end portion (33), wherein the intermediate nozzle (31) has, in particular, a radially inwardly projecting pressure step (34) which pressurizes the flame arrester body (11) in the direction of the support step (16), and thus acts as a pressure nut in this area, wherein the pressure step (34) is arranged in particular at a lower end (35) of the nut end portion (33).

9. The pressure release device according to one of the preceding claims, wherein the nut end portion (33) has a radially inwardly projecting annular step (36), the outer diameter (37) of which is in particular substantially equal to an outer diameter (38) of the support step (16), and preferably a splash protection body (39) can be arranged on the annular step (36) and can be pressurized by means of the pressure nut (13) with its pressure edge (14) in the direction of the annular step (36), wherein the splash protection body (39) is in particular a sintered body (40).

10. The pressure release device according to one of the preceding claims, wherein the splash protection body (39) and the flame arrester body (11) are made of the same material and/or the splash protection body (39) has a higher density than the flame arrester body (11).

11. The pressure release device according to one of the preceding claims, wherein the splash protection body (39) has at least one drainage opening (41), wherein the drainage opening (41) is preferably designed as a radially outwardly open edge groove (42).

12. The pressure release device according to one of the preceding claims, wherein the annular step (36) has a spigot (43) connecting the longitudinal channel (10) and drainage opening (41), wherein the splash protection body (39) and the flame arrester body (11) are preferably arranged at a distance from one another in the longitudinal channel (10).

13. The pressure release device according to one of the preceding claims, wherein a moisture protection membrane (44) is arranged, in particular replaceably arranged, between the splash protection body (39) and the flame arrester body (11).

14. The pressure release device according to one of the preceding claims, wherein the intermediate nozzle (31) is secured in its screw-on position (45) by means of a fitting screw (46) or the like, wherein the intermediate nozzle (31) has, in particular, a radially outwardly projecting screw-in polygon (47).

15. The pressure release device according to one of the preceding claims, wherein the splash protection body (39) and/or flame arrester body (11) are pressure-elastic and/or have a pore closure on the outer edge.

## Revendications

1. Dispositif de décompression (1) pour un boîtier (2) protégé contre les explosions, en particulier résistant à la pression, comportant une tubulure de paroi (3), qui peut être insérée, au moins partiellement, dans une ouverture (4) de boîtier d'une paroi (6) de boîtier, à l'aide de sa section de tubulure d'insertion (5), qui peut être fixée en particulier de manière amovible depuis un côté intérieur du boîtier et venant en appui, dans sa position insérée et fixée, avec une collerette d'appui (7) faisant saillie radialement vers l'extérieur, depuis l'extérieur sur un bord (8) d'ouverture de l'ouverture (4) de boîtier, dans lequel la tubulure de paroi (3) présente également une section de tubulure saillante (9) qui est opposée à la section de tubulure d'insertion par rapport à la collerette d'appui (7) et un canal longitudinal (10) traversant la tubulure de paroi (3), dans lequel canal un corps pare-flammes (11) est inséré de manière interchangeable, dans lequel un écrou de pression (13), sollicitant le corps pare-flammes (11) dans sa position d'insertion et comportant un bord de pression (14) faisant, au moins par endroits, saillie radialement vers l'intérieur, peut être vissé sur une section d'extrémité libre (12) de la section de tubulure saillante (9), et dans lequel le bord de pression (14) est en contact avec un côté visible extérieur du corps pare-flammes (11).

2. Dispositif de décompression selon la revendication 1, dans lequel le canal longitudinal (10) présente un gradin d'appui (16) faisant saillie radialement vers l'intérieur pour déterminer la position d'insertion du corps pare-flammes (11), dans lequel en particulier une bague d'écartement (17), de préférence constituée d'un matériau ignifuge ou résistant au feu, peut être agencée de préférence entre le gradin d'appui (16) et le corps pare-flammes (11).

3. Dispositif de décompression selon la revendication 1 ou 2, dans lequel la section de tubulure saillante (9) présente un filetage externe (19) correspondant à un filetage interne (18) de l'écrou de pression (13).

4. Dispositif de décompression selon l'une quelconque des revendications précédentes, dans lequel le bord de pression (14) est formé sur l'extrémité libre extérieure (20) de l'écrou de pression (13) et est en particulier formé sur sa face extérieure sous la forme d'une pièce polygonale de vissage (21) et/ou le bord de pression (14) présente une saillie de pression (23) sur sa face inférieure (22) tournée vers le corps pare-flammes (11).

5. Dispositif de décompression selon l'une quelconque des revendications précédentes, dans lequel l'écrou de pression (13) est un écrou protégé contre le desserrage, dans lequel en particulier une vis de montage (24) peut être vissée latéralement dans l'écrou de pression (13) à des fins de sécurité.

6. Dispositif de décompression selon l'une quelconque des revendications précédentes, dans lequel le corps pare-flammes (11) est un corps fritté (25) et/ou le corps pare-flammes (11) présente des côtés supérieur et/ou inférieur plats (26, 27) comportant entre eux une région de bord plat (28) et/ou dans lequel le corps pare-flammes (11) est inséré dans le canal longitudinal (10) sans espace d'allumage.

7. Dispositif de décompression selon l'une quelconque des revendications précédentes, dans lequel la section de tubulure saillante (9) présente un filetage en contre-dépouille (30) sur sa section d'extrémité (29) adjacente à la collerette d'appui (7).

8. Dispositif de décompression selon l'une quelconque des revendications précédentes, dans lequel une tubulure intermédiaire (31) peut être agencée sensiblement entre un autre écrou de pression (13) et la collerette d'appui (7), laquelle tubulure intermédiaire peut être vissée à l'aide de son segment d'extrémité (32) de tubulure sur la section de tubulure saillante (9) et l'écrou de pression (13) peut être vissé sur son autre section d'extrémité (33) d'écrou, dans lequel la tubulure intermédiaire (31) présente en particulier un gradin de pression (34) faisant saillie radialement vers l'intérieur et exerçant une pression sur le corps pare-flammes (11) en direction du gradin d'appui (16) et agit ainsi comme un écrou de pression dans cette zone, dans lequel le gradin de pression (34) est agencé en particulier au niveau d'une extrémité inférieure (35) de la section d'extrémité (33) d'écrou.

9. Dispositif de décompression selon l'une quelconque des revendications précédentes, dans lequel la section d'extrémité (33) d'écrou présente un gradin annulaire (36) faisant saillie radialement vers l'intérieur, dont le diamètre extérieur (37) est en particulier sensiblement égal à un diamètre extérieur (38) du gradin d'appui (16), et de préférence, un corps protecteur (39) contre les projections d'eau peut être agencé sur le gradin annulaire (36) et peut être mis sous pression par son bord de pression (14) en direction du gradin annulaire (36) au moyen de l'écrou de pression (13), dans lequel le corps protecteur (39) contre les projections d'eau est en particulier un corps fritté (40).

10. Dispositif de décompression selon l'une quelconque des revendications précédentes, dans lequel le corps protecteur (39) contre les projections d'eau et le corps pare-flammes (11) sont constitués du même matériau et/ou le corps protecteur (39) contre les projections d'eau présente une densité supérieure à celle du corps pare-flammes (11).

11. Dispositif de décompression selon l'une quelconque des revendications précédentes, dans lequel le corps protecteur (39) contre les projections d'eau présente au moins une ouverture de drainage (41), dans lequel l'ouverture de drainage (41) est de préférence réalisée sous la forme d'une rainure périphérique (42) ouverte radialement vers l'extérieur.

12. Dispositif de décompression selon l'une quelconque des revendications précédentes, dans lequel le gradin annulaire (36) présente un perçage (43) reliant un canal longitudinal (10) et l'ouverture de drainage (41), dans lequel le corps protecteur (39) contre les projections d'eau et le corps pare-flammes (11) sont de préférence agencés espacés l'un de l'autre dans le canal longitudinal (10).

13. Dispositif de décompression selon l'une quelconque des revendications précédentes, dans lequel une membrane protectrice (44) contre l'humidité est agencée, en particulier de manière interchangeable, entre le corps protecteur (39) contre les projections d'eau et le corps pare-flammes (11).

14. Dispositif de décompression selon l'une quelconque des revendications précédentes, dans lequel la tubulure intermédiaire (31) est fixée dans sa position de vissage (45) au moyen d'une vis de montage (46) ou similaire, dans lequel la tubulure intermédiaire (31) présente en particulier une pièce polygonale de vissage (47) faisant saillie radialement vers l'extérieur.

15. Dispositif de décompression selon l'une quelconque des revendications précédentes, dans lequel le corps protecteur (39) contre les projections d'eau et/ou le corps pare-flammes (11) sont élastiques sous pression et/ou présentent une fermeture de pores sur le bord extérieur.
